# EUROPÄISCHE PATENTANMELDUNG

(11) **EP 1 055 937 A2**
(43) Veröffentlichungstag der Anmeldung: **29.11.2000**
(21) Anmeldenummer: 00109081.0
(22) Anmeldetag: 02.05.2000
(51) Int. Cl.: G01S 7/481, G01S 17/89, G02B 26/10

(54) **Empfangseinrichtung für einen Laserscanner**

(30) Priorität: 24.06.1999 DE 19928957; 22.05.1999 DE 19923692
(71) Anmelder: Volkswagen Aktiengesellschaft, 38436 Wolfsburg (DE)
(72) Erfinder: Schneider, Arthur, 38112 Braunschweig (DE); Grübel, Andre, 33604 Bielefeld (DE)

(57) **Zusammenfassung**

Die Erfindung betrifft eine Empfangseinrichtung für einen Laserscanner mit einem Drehspiegel (3), mindestens einem Fokussierelement und mindestens einem Laserlichtempfänger (7), wobei der Drehspiegel (3) ein reflektiertes Laserlichtstrahlenbündel auf das Fokussierelement wirft und das Fokussierelement das Laserlichtstrahlenbündel auf den Laserlichtempfänger (7) bündelt. Erfindungsgemäß wird der benötigte Bauraum für einen Laserscanner dadurch verringert, daß die Empfangseinrichtung als Fokussierelement einen Hohlspiegel (12) aufweist.

## Beschreibung

Die Erfindung betrifft eine Empfangseinrichtung für einen Laserscanner mit einem Drehspiegel, mindestens einem Fokussierelement und mindestens einem Laserlichtempfänger, wobei der Drehspiegel ein reflektiertes Laserlichtstrahlenbündel auf das Fokussierelement wirft und das Fokussierelement das Laserlichtstrahlenbündel auf den Laserlichtempfänger bündelt.

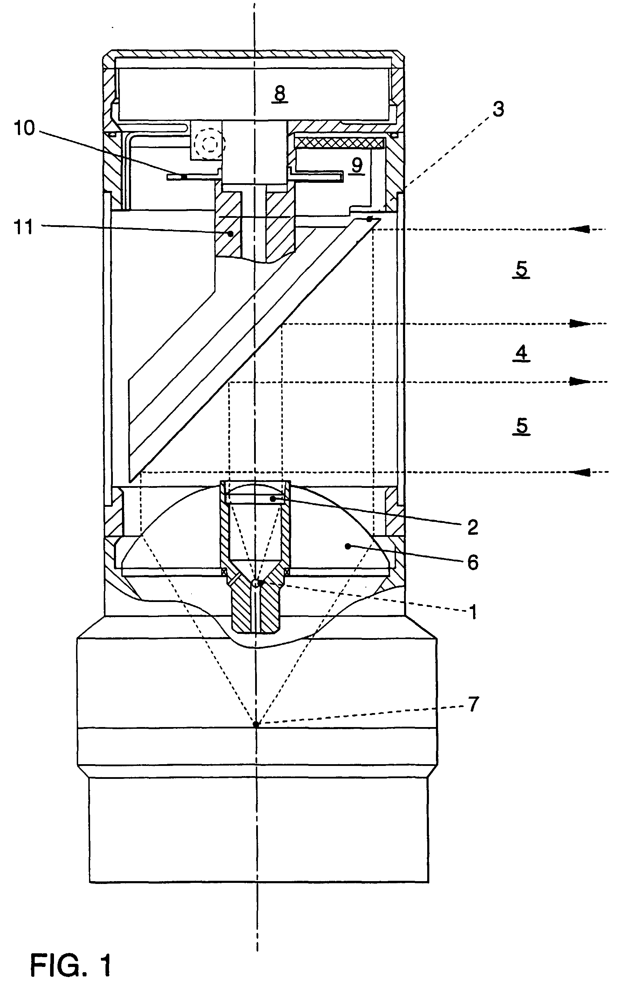

Eine derartige, aus dem Stand der Technik bekannte Empfangseinrichtung für einen Laserscanner ist in Fig. 1 der Zeichnung dargestellt. Dieser bekannte Laserscanner weist zur Abstrahlung des Laserlichts zunächst eine Sendeeinrichtung bestehend aus einer Laserlichtquelle 1, einer Sendelinse 2 und einem Drehspiegel 3 auf. Von dieser Sendeeinrichtung wird ein Sendelaserlichtstrahlenbündel 4 rotierend abgestrahlt. Das an einem Gegenstand in der Umgebung des Laserscanners reflektierte Laserlicht fällt zumindest teilweise in einem Empfangslaserlichtstrahlenbündel 5 zurück auf den Drehspiegel 3 und wird von diesem Drehspiegel 3 auf ein als eine Empfangslinse 6 ausgebildetes Fokussierelement geworfen. Die Empfangslinse 6 fokussiert das Empfangslaserlichtstrahlenbündel auf einen als Photodiode 7 ausgebildeten Laserlichtempfänger. Das Ausgangssignal dieser Photodiode 7 wird anschließend von einer Elektronik ausgewertet, um die gewünschten Informationen über Gegenstände in der Umgebung des Laserscanners zu gewinnen.

Der Drehspiegel 3 wird bei dem bekannten, in Fig. 1 dargestellten Laserscanner von einem Motor 8 in Rotation versetzt. Die Winkelstellung des Drehspiegels 3 wird dabei von einem Sensor 9 überwacht, der die Stellung eines Coderades 10 detektiert. Die Verbindung zwischen dem Motor 8 und dem Drehspiegel 3 wird über eine Welle 11 hergestellt.

Bei dieser bekannten Empfangseinrichtung für einen Laserscanner ist problematisch, daß mit der hier verwendeten Empfangslinse 6 eine relativ hohe Brennweite und damit ein verlängerter Bauraum verbunden ist. Dieser Bauraum ist jedoch insbesondere in Kraftfahrzeugen, in denen die beschriebenen Laserscanner zur Abtastung der Umgebung vorwiegend eingesetzt werden, im Hinblick auf eine optimale Integration problematisch.

Ausgehend von dem zuvor beschriebenen Stand der Technik liegt der vorliegenden Erfindung die Aufgabe zugrunde, eine Empfangseinrichtung für einen Laserscanner zur Verfügung zu stellen, mit der der von dieser Empfangseinrichtung in Anspruch genommene Bauraum deutlich reduziert ist.

Die zuvor hergeleitete und aufgezeigte Aufgabe ist nach einer ersten Lehre der Erfindung dadurch gelöst, daß das Fokussierelement als Hohlspiegel ausgebildet ist. Einerseits lassen sich mit Hohlspiegeln relativ unproblematisch kürzere Brennweiten erzeugen und andererseits nutzt der Hohlspiegel den optischen Empfangsweg gleichzeitig zur Fokussierung. Beide Eigenschaften des Hohlspiegels führen im Ergebnis zu der erwünschten verkürzten Baulänge.

Besonders vorteilhaft ist die Ausgestaltung, nach der der Hohlspiegel als Parabolspiegel ausgebildet ist. Durch die Verwendung eines Parabolspiegels ist sichergestellt, daß alle achsenparallel einfallenden reflektierten Laserlichtstrahlen unabhängig von ihrem Achsenabstand in einem gemeinsamen Brennpunkt vereinigt werden.

Um zu gewährleisten, daß von dem vom Drehspiegel reflektierten Empfangslaserlichtstrahlenbündel ein möglichst geringer Anteil durch die Abschattung eines Laserlichtempfängers verloren geht, ist gemäß einer weiteren Ausgestaltung der ersten Lehre der Erfindung die optische Achse des Parabolspiegels in den Bereich der Projektion des Umfangs des Drehspiegels in Richtung der Drehachse verlegt. Hierdurch ist es möglich, den Laserlichtempfänger in etwa auf dem Projektionszylinder des Umfangs des Drehspiegels in Richtung der Drehachse, insbesondere knapp außerhalb dieses Projektionszylinders anzuordnen, so daß eine nur geringe oder keine Abschattung vorhanden ist. Gleichzeitig ist es mit dieser Ausgestaltung gewährleistet, daß eine Laserlichtquelle auf der Drehachse des Drehspiegels angeordnet werden könnte.

Dadurch, daß ein zweites Fokussierelement auf der optischen Hauptachse des Hohlspiegels angeordnet ist, wird es ermöglicht, den Laserlichtempfänger an einem im Hinblick auf den elektrischen Anschluß und die Abschattung optimalen Ort im Laserscanner anzuordnen.

Wird zweite Fokussierelement als Spiegel, insbesondere als Parabolspiegel ausgebildet, so wird die Anordnung des Laserlichtempfängers am Fußpunkt des Parabolspiegels ermöglicht, was im Hinblick auf die Ausnutzung des Bauraumes und eine einfache Montage von Vorteil ist.

Gemäß einer zweiten Lehre der Erfindung ist die bekannte Empfangseinrichtung für einen Laserscanner dadurch weitergebildet, daß der Drehspiegel beidseitig verspiegelt ist und der zweiten verspiegelten Seite des Drehspiegels mindestens ein Fokussierelement und ein Laserlichtempfänger zugeordnet ist. Durch diese Ausgestaltung des Drehspiegels und die zusätzliche Anordnung eines zweiten Fokussierelementes bzw. eines zweiten Laserlichtempfängers ist gewährleistet, daß bei jeder Umdrehung des Drehspiegels nicht wie bei dem bekannten Laserscanner eine einzelne Abtastung der Gegenstände in der Umgebung des Laserscanners erfolgt, sondern zwei Abtastungen durch in einem Abstand von 180° abgestrahlte und empfangene Laserlichtstrahlenbündel möglich wird. Hierdurch ergibt sich bei gleicher Umdrehungszahl eine verbesserte zeitliche Auslösung der Abtastung bei nur geringfügig vergrößerter Bauhöhe.

Auch bei einer Empfangseinrichtung für einen Laserscanner nach der zweiten Lehre der Erfindung führen die Maßnahmen nach der ersten Lehre der Erfindung zu den in bezug auf die erste Lehre der Erfindung beschriebenen Vorteilen.

Darüber hinaus erfährt die zweite Lehre der Erfindung eine vorteilhafte Ausgestaltung dadurch, daß die beiden verspiegelten Seiten des Drehspiegels gegenüber der Drehachse unterschiedlich geneigt sind. Durch diese unterschiedliche Neigung ergibt sich bei einer vertikal orientierten Drehachse ein vertikal abweichender Abtastbereich für beide Laserlichtstrahlenbündel. Dies ist insbesondere beim Einsatz von Laserscannern in Kraftfahrzeugen gewünscht, da durch diesen unterschiedlichen vertikalen Abtastbereich ein verbesserter Ausgleich von Nickbewegungen des Kraftfahrzeuges erfolgen kann.

Es gibt nun eine Vielzahl von Möglichkeiten die erfindungsgemäße Empfangseinrichtung für einen Laserscanner auszugestalten und weiterzubilden. Hierzu wird beispielsweise einerseits verwiesen auf die den Patentansprüchen 1 und 6 nachgeordneten Patentansprüche andererseits auf die Beschreibung verschiedener Ausführungsbeispiele in Verbindung mit der Zeichnung. In der Zeichnung zeigt:
- Fig. 2: eine Seitenansicht eines Laserscanners mit einem ersten Ausführungsbeispiel einer Empfangseinrichtung nach der ersten Lehre der Erfindung,
- Fig. 3: eine Vorderansicht eines Laserscanners mit dem ersten Ausführungsbeispiel einer Empfangseinrichtung nach der ersten Lehre der Erfindung,
- Fig. 4: eine Seitenansicht eines Laserscanners mit einem zweiten Ausführungsbeispiel einer Empfangseinrichtung nach der ersten Lehre der Erfindung und
- Fig. 5: eine Seitenansicht eines Laserscanners mit einem Ausführungsbeispiel einer Empfangseinrichtung nach der zweiten Lehre der Erfindung.

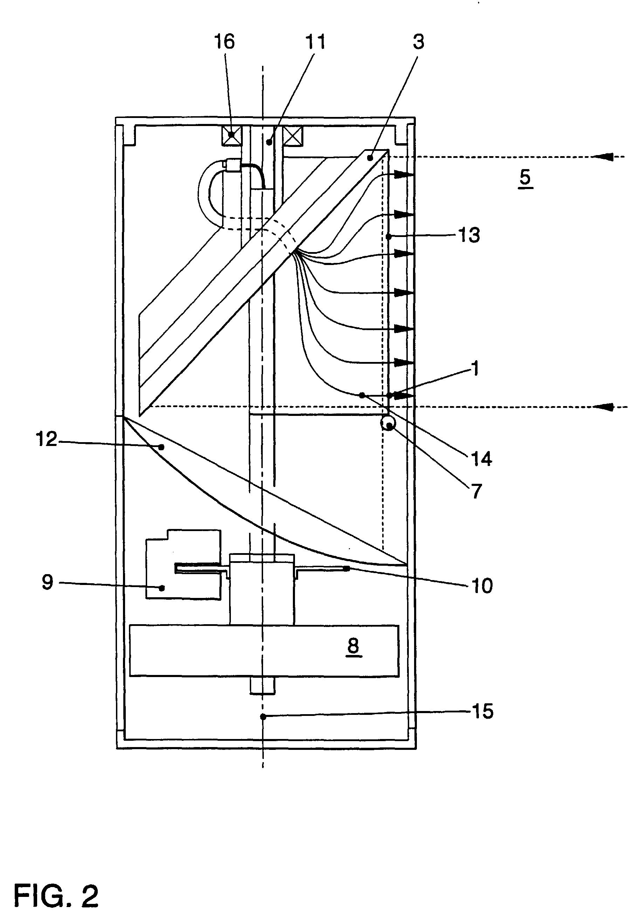

Bei den in den Fig. 2 bis 5 dargestellten Laserscannern, die verschiedene Ausführungsbeispiele für eine erfindungsgemäße Empfangseinrichtung aufweisen, werden für übereinstimmende Bauteile die bereits in Fig. 1 eingeführten Bezugszeichen verwendet.

Fig. 2 zeigt ein erstes Ausführungsbeispiel einer Empfangseinrichtung für einen Laserscanner nach der ersten Lehre der Erfindung mit einem Drehspiegel 3, einem erfindungsgemäß als Parabolspiegel 12 ausgebildeten Fokussierelement und einem als Photodiode 7 ausgebildeten Laserlichtempfänger. Der Drehspiegel 3 wirft ein reflektiertes Empfangslaserlichtstrahlenbündel 5 auf den Parabolspiegel 12, der das Laserlichtstrahlenbündel auf die Photodiode 7 bündelt.

Das in Fig. 2 nicht gesondert dargestellte Sendelaserlichtstrahlenbündel wird bei diesem Ausführungsbeispiel von insgesamt sieben Laserlichtquellen 1 erzeugt, die an einer Fahne 13 angebracht sind. Die Fahne 13 stützt sich am oberen Rand des Drehspiegels 3 und etwa in der Mitte der Welle 11 ab. Die Laserlichtquellen 1 können hierbei als Enden von Lichtwellenleitern, wie in Fig. 2 dargestellt, oder als Photodioden ausgebildet sein. Bei dem ersten Ausführungsbeispiel wird das Laserlicht von einer feststehenden Laserdiode 15 in in der Welle 11 geführte Lichtwellenleiter 14 eingestrahlt. Das Lichtwellenleiterbündel wird im oberen Bereich des Laserscanners aus der Welle 11 hinaus durch den Drehspiegel 3 hindurch zur Fahne 13 geführt.

Durch die Verwendung einer Vielzahl linear angeordneter Laserlichtquellen 1 ist bei gewährleisteter Augensicherheit die Abstrahlung einer insgesamt höheren Lichtleistung möglich.
Bei dem in Fig. 2 dargestellten Ausführungsbeispiel ist der Parabolspiegel 12 als "halber" Parabolspiegel ausgestaltet, dessen optische Achse in etwa auf der Projektion des Umfangs des Drehspiegels 3 in Richtung der Drehachse liegt. Entsprechend ist die Photodiode 7 im Bereich der Projektion des Umfangs des Drehspiegels in Richtung der Drehachse ortsfest angeordnet. Bei dem dargestellten Ausführungsbeispiel befindet sich die optische Achse des Parabolspiegels 12 etwas außerhalb der Projektion des Drehspiegels 3, so daß auch der Brennpunkt des Parabolspiegels 3 außerhalb dieser Projektion liegt was wiederum dazu führt, daß auch die Photodiode 7 außerhalb dieser Projektion anzuordnen ist, wodurch eine Abschattung des Empfangslaserlichtstrahlenbündels vor dem Parabolspiegel 12 vollständig vermieden wird.

Dadurch, daß sowohl die Sendeeinrichtung als auch die Empfangseinrichtung bei dem dargestellten Ausführungsbeispiel eines Laserscanners gemäß der ersten Lehre der Erfindung außerhalb der Rotationsachse des Drehspiegels angeordnet sind, ergibt sich die bei dem dargestellten ersten Ausführungsbeispiel verwirklichte Möglichkeit, die Welle 11 durch den Parabolspiegel 12 hindurch zu verlängern, wodurch der Motor 8 bei dem dargestellten Ausführungsbeispiel unterhalb des Parabolspiegels angeordnet werden kann, wobei gleichzeitig die Welle 11 oberhalb des Drehspiegels 3 sich in einem gesonderten Lager 16 abstützt. Durch die Anordnung des Motors 8 unterhalb des Parabolspiegels 12 ergibt sich eine vereinfachte Montage, da sämtliche elektrischen Bauteile nunmehr nur noch auf einer Seite des Laserscanners angeordnet sind.

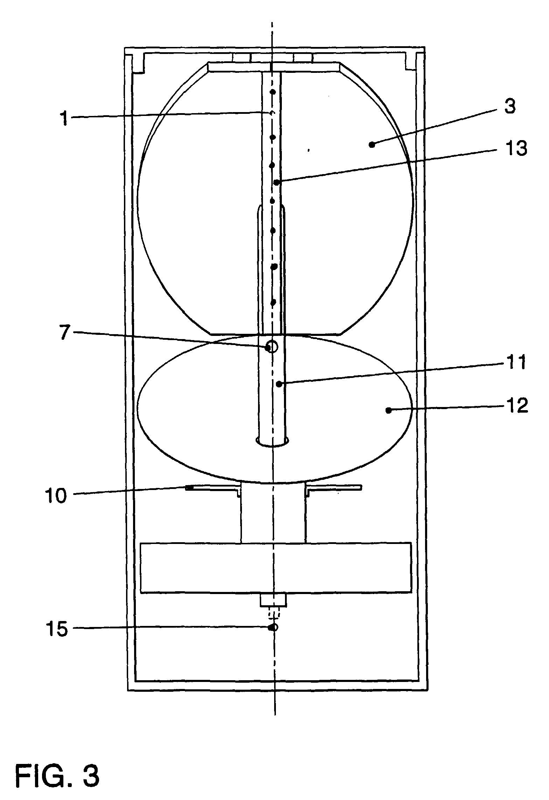

Fig. 3 zeigt eine Vorderansicht des ersten Ausführungsbeispiels einer erfindungsgemäßen Empfangseinrichtung für einen Laserscanner. Aus dieser Vorderansicht wird insbesondere die erfindungsgemäß geringe Bauhöhe des Laserscanners ersichtlich, die durch die Verwendung eines Parabolspiegels 12 als Fokussierelement gewährleistet ist. Der Parabolspiegel 12 bündelt das vom Drehspiegel 3 reflektierte Licht in Einfallrichtung auf die Photodiode 7, wodurch im Vergleich zu einer Linse als Fokussierelemente Bauhöhe im Umfang einer Brennweite gewonnen wird. Darüber hinaus läßt sich durch die Verwendung eines Hohlspiegels, insbesondere eines Parabolspiegels 12, eine Anordnung verwirklichen, bei der der Laserlichtempfänger, d.h. die Photodiode 7, außerhalb der Drehachse des Drehspiegels 3 angeordnet ist. Hierdurch ergeben sich die bereits beschriebenen Vorteile im Hinblick auf eine verringerte Abschattung des empfangenen Laserlichtes.

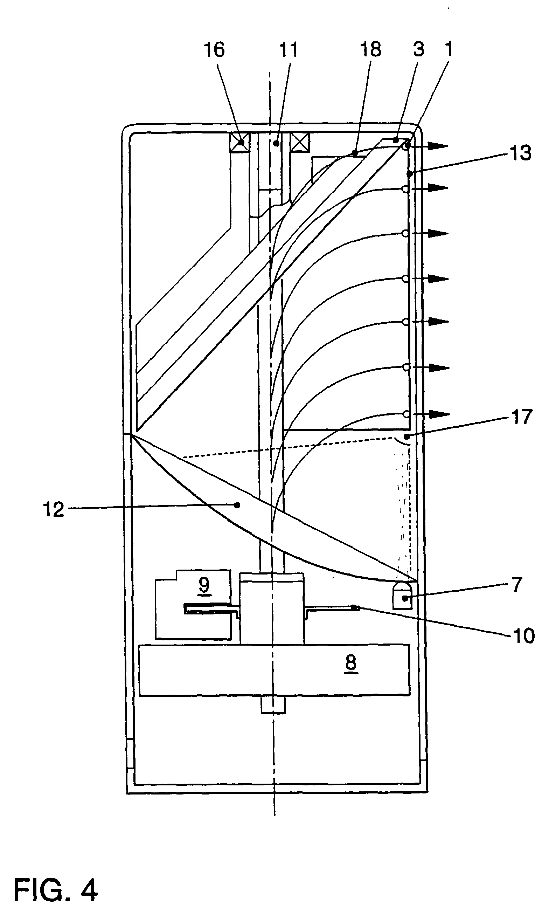

Bei dem in Fig. 4 dargestellten zweiten Ausführungsbeispiel einer Empfangseinrichtung gemäß der ersten Lehre der Erfindung für einen Laserscanner ist ein zweites Fokussierelement, nämlich ein Parabolspiegel 17 auf der optischen Hauptachse des Parabolspiegels 12 angeordnet und bündelt das empfangene Laserlicht auf die im Bereich des Durchstoßpunktes der optischen Hauptachse durch den Parabolspiegel 12 angeordnete Photodiode 7. Durch diese weitere Maßnahme läßt sich eine weitere Konzentration der elektrischen Bauteile im unteren Bereich des Laserscanners gewährleisten, was, wie bereits erwähnt, zu einer einfacheren Montage führt.

Bei dem zweiten Ausführungsbeispiel sind darüber hinaus die Laserlichtquellen 1 nicht wie beim ersten Ausführungsbeispiel als Enden von Lichtwellenleitern sondern als separate, an der Fahne 13 befestigte Laserdioden ausgeführt. Diese Laserdioden werden über in der Welle 11 geführte elektrische Leitungen 18 mit Energie versorgt. Die Ausführung der Laserlichtquellen als Enden von Lichtwellenleitern oder separate Laserdioden sind bei dem ersten und zweiten Ausführungsbeispiel ohne weiteres austauschbar.

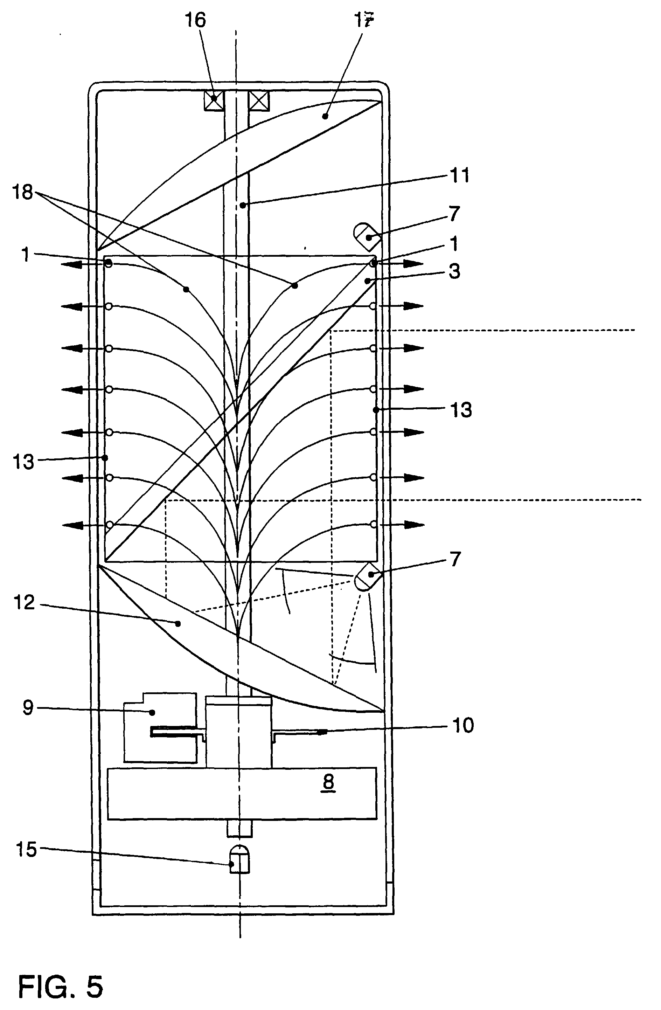

Bei dem in Fig. 5 dargestellten dritten Ausführungsbeispiel handelt es sich um ein Ausführungsbeispiel bei dem sowohl die erste als auch die zweite Lehre der Erfindung verwirklicht sind. Gemäß der zweiten Lehre der Erfindung ist der Drehspiegel 3 beidseitig verspiegelt und sind der zweiten verspiegelten Seite des Drehspiegels 3 ein als Parabolspiegel 12 ausgeführtes Fokussierelement und ein als Photodiode 7 ausgeführter Laserlichtempfänger zugeordnet. Durch die Verwirklichung der zweiten Lehre der Erfindung ergibt sich die Möglichkeit des Sendens und Empfangens zweier rotierender Laserlichtstrahlenbündel, die in Drehrichtung um 180° zueinander versetzt sind. Hierdurch verdoppelt sich bei gleicher Drehgeschwindigkeit das zeitliche Auflösungsvermögen eines erfindungsgemäß ausgestalteten Laserlichtscanners.

Aus Fig. 5 nicht ohne weiteres erkennbar sind die beiden verspiegelten Flächen des Drehspiegels 3 nicht planparallel zueinander, so daß zwei zur Drehachse des Drehspiegels 3 unterschiedlich geneigte Laserlichtstrahlenbündel gesendet und empfangen werden, so daß sich, eine vertikale Ausrichtung der Drehachse vorausgesetzt, vertikal voneinander unterscheidende Abtastbereiche ergeben, mit Hilfe derer Nickbewegungen von mit einem erfindungsgemäß ausgestalteten Laserscanner ausgestatteten Kraftfahrzeugen ausgeglichen werden können.

## Patentansprüche

1. Empfangseinrichtung für einen Laserscanner mit einem Drehspiegel (3), mindestens einem Fokussierelement und mindestens einem Laserlichtempfänger (7), wobei der Drehspiegel (3) ein reflektiertes Laserlichtstrahlenbündel auf das Fokussierelement wirft und das Fokussierelement das Laserlichtstrahlenbündel auf den Laserlichtempfänger (7) bündelt,
dadurch gekennzeichnet, daß
das Fokussierelement als Hohlspiegel (12) ausgebildet ist.

2. Empfangseinrichtung nach Anspruch 1,
dadurch gekennzeichnet, daß
der Hohlspiegel (12) als Parabolspiegel ausgebildet ist.

3. Empfangseinrichtung nach Anspruch 2,
dadurch gekennzeichnet, daß
die optische Achse des Parabolspiegels im Bereich der Projektion des Umfangs des Drehspiegels (3) in Richtung der Drehachse liegt.

4. Empfangseinrichtung nach einem der Ansprüche 1 bis 3,
dadurch gekennzeichnet, daß
ein zweites Fokussierelement auf der optischen Hauptachse des Hohlspiegels (12) angeordnet ist.

5. Empfangseinrichtung nach Anspruch 4,
dadurch gekennzeichnet, daß
das zweite Fokussierelement als Spiegel (17), insbesondere als Parabolspiegel, ausgebildet ist.

6. Empfangseinrichtung für einen Laserscanner mit einem Drehspiegel (3), mindestens einem Fokussierelement und mindestens einem Laserlichtempfänger (7), wobei der Drehspiegel (3) ein reflektiertes Laserlichtstrahlenbündel auf das Fokussierelement wirft und das Fokussierelement das Laserlichtstrahlenbündel auf den Laserlichtempfänger (7) bündelt, insbesondere nach einem der Ansprüche 1 bis 5, dadurch gekennzeichnet, daß
der Drehspiegel (3) beidseitig verspiegelt ist und der zweiten verspiegelten Seite des Drehspiegels (3) mindestens ein Fokussierelement und ein Laserlichtempfänger (7) zugeordnet ist.

7. Empfangseinrichtung nach Anspruch 6,
dadurch gekennzeichnet, daß
die beiden verspiegelten Seiten des Drehspiegels (3) gegenüber der Drehachse unterschiedlich geneigt sind.
